# EUROPÄISCHE PATENTANMELDUNG

(11) **EP 0 620 413 A1**
(43) Veröffentlichungstag der Anmeldung: **19.10.1994**
(21) Anmeldenummer: 94104061.0
(22) Anmeldetag: 16.03.1994
(51) Int. Cl.: G01B 11/28, G01B 3/16

(54) **Verfahren und Anordnung zur Bestimmung einer zumindest annähernd kreisförmigen Berührungsfläche**

(30) Priorität: 16.04.1993 DE 4312403
(71) Anmelder: JENOPTIK GmbH, D-07743 Jena (DE)
(72) Erfinder: Görlich, Steffen, D-07743 Jena (DE); Klose, Norbert, D-07616 Graitschen (DE); Merker, Wolfgang, D-07749 Jena (DE); Möhr, Klaus, D-07607 Eisenberg (DE); Voigt, Peter, D-07747 Jena (DE); Wieser, Joachim, D-07749 Jena (DE)

(57) **Zusammenfassung**

Die Aufgabe, eine einfache Möglichkeit zur objektiven Bestimmung der Berührungsfläche eines deformierbaren Mediums auf einer ebenen Fläche mit hoher Genauigkeit und geringem technischen Aufwand zu finden, wird erfindungsgemäß gelöst, indem als ebene Fläche ein Schichtwellenleiter (5) Verwendung findet, in den ein inkohärentes, paralleles, homogenes, eindimensional breit aufgeweitetes Lichtbündel (2) eingekoppelt wird, und das ausgekoppelte Licht einer Photoempfängerzeile (7) zur Aufnahme eindimensionaler Intensitätsverteilungen zugeführt wird, wobei eine Auswerteeinrichtung (8) aus einer Normalkurve (81) ohne berührendes Medium und einer Meßkurve (82) mit berührendem Medium eine Differenzkurve (83) erzeugt und aus dem Abstand von zwei zusammengehörigen Extrema der Differenzkurve (83) der exakte Durchmesser der Berührungsfläche ermittelt wird.

Die Erfindung findet vorzugsweise in der Opthalmologie zur Messung des Applanationskreises am Tonometer Anwendung und kommt bei der Vermessung von Flüssigkeitstropfen für Analysezwecke zum Einsatz.

## Beschreibung

Die Erfindung betrifft Verfahren und Anordnungen zur Bestimmung einer zumindest annähernd kreisförmigen Berührungsfläche eines deformierten Mediums auf einer ebenen Fläche, insbesondere zum Nachweis eines Applanationskreises an einem Applanationstonometer.

Die Änderung der optischen Eigenschatten eines Wellenleiters bei Kontakt mit einem Medium ist Gegenstand verschiedener Veröffentlichungen z. B. zur Stoffanalyse (EP 403 468, GB 2 156 970, DE 37 23 159). Diese als Chemosensoren ausgebildeten Anordnungen beschäftigen sich lediglich mit dem Nachweis unterschiedlicher Substanzen in den angrenzenden Medien, wobei eine selektive, permeable Wellenleiterschicht, in die die nachzuweisenden Substanzen eindiffundieren oder an diese gebunden werden, Veränderungen der optischen Dichte bzw. des Brechungsindex erfährt, wodurch sich Änderungen der Phase, Polarisation bzw. Intensität des hindurchtretenden Lichtes nachweisen lassen. Desweiteren ist eine Lösung bekannt, die die Änderung der letztgenannten physikalischen Eigenschaften durch eine unterschiedlich große Kontaktfläche zum Inhalt hat und in der Ophthalmologie zur Messung des intraokularen Druckes des menschlichen Auges Anwendung findet. Hier wird derselbe Wirkmechanismus wie in der EP-OS 40 34 68 genutzt, indem mit kohärentem, linear polarisiertem Licht in einem Schichtwellenleiter zwei zueinander senkrecht orientierte Schwingungsmoden angeregt werden, bei denen entlang der Kontaktfläche mit der applanierten Hornhaut des Auges unterschiedliche effektive Brechungsindizes wirken. Dadurch ergeben sich zwischen beiden Moden Phasendifferenzen, die auf verschiedene Weise bestimmbar sind, beispielsweise durch Einsatz eines (linearen) Polarisators vor einem Empfänger in Form einer Intensitätsänderung.

Nachteilig an dem bekannten Wirkprinzip ist jedoch insbesondere für die genaue Bestimmung der Größe der Kontaktfläche, daß der Aufwand für die Ermittlung der Phasendifferenz noch relativ hoch ist (Laser, Polarisatoren und Analyse der Intensitätsänderung, aufwendige Einstellung der Polarisatoren).

Der Erfindung liegt die Aufgabe zugrunde, eine einfache Möglichkeit zur objektiven Bestimmung der Berührungsfläche eines deformierbaren Mediums auf einer ebenen Fläche zu finden, die bei hoher Genauigkeit einen geringen technischen Aufwand erfordert.

Erfindungsgemäß wird die Aufgabe bei einem Verfahren zur Bestimmung einer zumindest annähernd kreisförmigen Berührungsfläche eines deformierten Mediums auf einer ebenen Fläche, wobei in einem auf die ebene Fläche aufgebrachten Schichtwellenleiter ein paralleles Lichtbündel eingekoppelt wird und mittels einer nach dem Schichtwellenleiter angeordneten Photoempfängerzeile eine Intensitätsmessung des durch den Schichtwellenleiter hindurchtretenden parallelen Lichtbündels erfolgt, dadurch gelöst, daß ein im wesentlichen inkohärentes Lichtbündel mit großer lateraler Ausdehnung in den Schichtwellenleiter eingekoppelt wird, mittels der Photoempfängerzeile eine eindimensionale Intensitätsverteilung aufgenommen wird, eine Normalkurve der Intensitätsverteilung ohne Berührung mit dem deformierbaren Medium aufgenommen wird, mindestens eine Meßkurve der Intensitätsverteilung mit Berührung des deformierbaren Mediums aufgezeichnet wird, eine Differenzkurve der Intensitätsverteilung aus Normal- und Meßkurve gebildet wird und eine Analyse der Differenzkurve auf lokale Extrema erfolgt, die sich aufgrund einer Brechungs- und Beugungsverschiebung ergeben, die an Stellen eines Sprunges des effektiven Brechungsindex des Schichtwellenleiters am Rand der Berührungsfläche mit dem deformierbaren Medium senkrecht zur Richtung des Lichtbündels auftritt und eine Bestimmung des korrigierten metrischen Abstandes von zusammengehörigen Paaren der Extrema erfolgt.

Vorteilhaft werden dabei die Werte der Differenzkurve zu den absoluten Signalgrößen ins Verhältnis gesetzt, um eine möglichst deutliche Auswertbarkeit der Extrema zu erreichen.

Eine weitere Verbesserung kann erreicht werden, wenn beispielsweise das parallele Lichtbündel linear polarisiert und nur der TM₀ - Mode im Schichtwellenleiter angeregt wird Zweckmäßig wird der metrische Abstand zweier zusammengehöriger lokaler Extrema dadurch ermittelt, daß ein auf die Größe der Extrema bezogener Intensitätsschwellwert festgelegt wird, der metrische Abstand der Extrema bei Erreichen des Intensitätsschwellwertes an den (auf die Lage der Berührungsfläche des deformierbaren Mediums bezogenen) äußeren Flanken der zwei lokalen Extrema erfaßt und durch Addition eines konstanten Korrekturwertes, der von der Entfernung zwischen deformierbaren Medium und Photoempfängerzeile abhängig ist, korrigiert wird.

Ein weiterer Gegenstand der Erfindung ist ein Verfahren zur Bestimmung eines Applanationskreises an einem Applanationstonometer, bei dem ein mit einem Schichtwellenleiter beauflagter Tonometerkörper, an dem eine Applanationskraftmessung erfolgt, bis zum Erreichen eines bestimmten Durchmessers des Applanationskreises auf ein Auge aufgedrückt, in den Schichtwellenleiter ein paralleles Lichtbündel eingekoppelt und dessen Intensitätsverteilung mittels einer Photoempfängerzeile aufgenommen wird, das dadurch gekennzeichnet ist, daß ein im wesentlichen inkohärentes Lichtbündel in den Schichtwellenleiter eingekoppelt wird, eine Normalkurve der Intensitätsverteilung ohne Berührung des Auges aufgenommen wird, mindestens eine Meßkurve der Intensitätsverteilung mit applaniertem Auge aufgezeichnet wird, eine Differenzkurve der Intensitätsverteilung aus Normal- und Meßkurve gebildet wird, eine Analyse der Differenzkurve auf lokale Extrema erfolgt, die sich aufgrund einer Brechungs- und Beugungserscheinung ergeben, die an Stellen eines Sprunges des effektiven Brechungsindex des Schichtwellenleiters am Applanationskreis senkrecht zur Richtung des Lichtbündels auftritt und eine Bestimmung des korrigierten metrischen Abstandes der zwei lokalen Extrema erfolgt.

Auch bei diesem Verfahren ist die Ausgestaltung mit TM₀-Mode-Anregung des Schichtwellenleiters und Normierung der Differenzkurve zweckmäßig.

Gegenstand der Erfindung sind weiterhin Anordnungen zur Bestimmung einer zumindest annähernd kreisförmigen Berührungsfläche eines deformierbaren Mediums an einer ebenen Fläche sowie zur Bestimmung eines Applanationskreises an einem Applanationstonometer, bestehend aus einem Schichtwellenleiter als Kontaktfläche für das deformierbare Medium bzw. den Applanationskreis eines Auges, einer Beleuchtungseinrichtung zur Einkopplung eines parallelen Lichtbündels in den Schichtwellenleiter und einer Photoempfängerzeile zur Aufnahme einer aus dem Schichtwellenleiter austretenden Intensitätsverteilung, mit denen die genannte Aufgabe erfindungsgemäß dadurch gelöst wird, daß die Beleuchtungseinrichtung eine im wesentlichen inkohärente Lichtquelle enthält, daß das von der Beleuchtungseinrichtung erzeugte parallele Lichtbündel mindestens so breit ist, daß die zu erwartende Ausdehnung der Berührungsfläche bzw. des Applanationskreises (wesentlich) überschritten wird und daß der Photoempfängerzeile eine Auswerteeinrichtung nachgeordnet ist, die Mittel zur Speicherung einer Normalkurve und mindestens einer Meßkurve, Mittel zum Erzeugen einer Differenzkurve aus Normal- und Meßkurve sowie Mittel zum Bestimmen von lokalen Extrema der Differenzkurve und deren Abstand als Maß für die Ausdehnung der Berührungsfläche bzw. des Applanationskreises enthält.

Vorteilhaft werden die Anordnungen durch einen Polarisator im Strahlengang des parallelen Lichtbündels vor der Einkopplung in den Schichtwellenleiter ergänzt, um durch Anregung des TM₀-Modes im Schichtwellenleiter eine größere Änderung des effektiven Brechungsindex und damit eine eindeutige Auswertbarkeit der Extrema zu erreichen. Weiterhin ist es bei der Gestaltung der Auswerteeinheit zweckmäßig, Mittel zur Normierung der Werte der Differenzkurve bezogen auf die absoluten Werte der Meßkurve vorzusehen.

Der Grundgedanke der Erfindung liegt in der Überlegung, zur Bestimmung der Größe der Berührungsfläche eines flüssigen oder festen deformierbaren Mediums nicht die aufwendigen Mittel der Zwei-Moden-Anregung und Interferenzauswertung zu verwenden, sondern die örtlichen Intensitätsänderungen, die durch Lichtbeeinflussung am Rande der Berührungsfläche des deformierbaren Mediums mit dem Schichtwellenleiter verursacht werden, auszunutzen. Der physikalische Hintergrund für die Realisierbarkeit dieses Konzeptes liegt in der Tatsache, daß im Gebiet der Berührungsfläche des deformierbaren Mediums der Schichtwellenleiter eine veränderte effektive Brechzahl aufweist. Die seitliche Begrenzung dieses Gebietes bezüglich des parallelen Lichtbündels stellt im Schichtwellenleiter einen Phasensprung zum unberührten Bereich des Schichtwellenleiters dar und führt zu Veränderungen der Intensitätsverteilung. Um die geänderte Intensitätsverteilung sichtbar zu machen, ist jedoch ein Vergleich mit der ursprünglichen Intensitätsverteilung ohne Berührung des interessierenden Mediums notwendig. Sinnvoll läßt sich dieser Vergleich durch Erzeugung einer Differenzkurve auswertetechnisch ausführen.

Mit dem erfindungsgemäßen Verfahren und den zugehörigen Anordnungen zur Realisierung des Verfahrens ist es möglich, die Größe einer annähernd kreisförmigen Berührungsfläche mit geringem technischen Aufwand objektiv zu bestimmen.

Vorteilhaft läßt sich die Erfindung zur Bestimmung des Applanationskreises an Applanationstonometern verwenden, die auf dem Tonometerprinzip von GOLDMANN (Ophthalmologica 134, 1957, 221) beruhen. Eine weitere vorteilhatte Anwendung ist bei der Größenbestimmung von Flüssigkeitströpfchen auf Objektträgern oder ähnlichen ebenen Flächen für Analysezwecke gegeben.

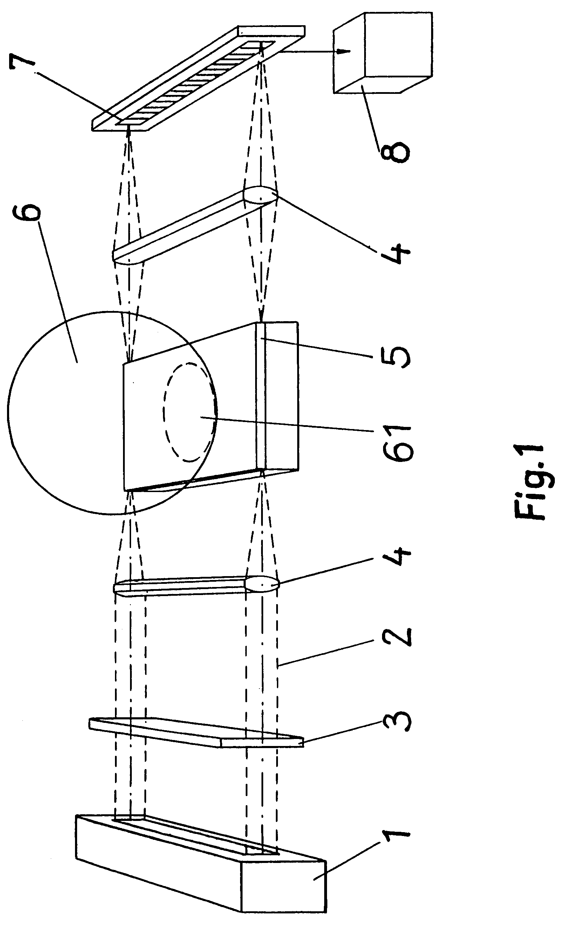

Die Erfindung soll nachstehend anhand eines Ausführungsbeispieles näher erläutert werden. Die Zeichnungen zeigen:
- Fig.1: ein Optikschema der erfindungsgemäßen Anordnung
- Fig.2: eine schematische Darstellung der Beeinflussung des geführten Lichts durch den Applanationskreis
- Fig.3: eine Aufzeichnung der Kurvenverläufe von Normalkurve, Meßkurve und Differenzkurve
In seinen Grundschritten besteht das erfindungsgemäße Verfahren - wie anhand der speziellen Anordnung gemäß Fig. 1 erkennbar - aus der Einkopplung eines breiten, im wesentlichen inkohärenten Lichtbündels 2 in einem Schichtwellenleiter 5, auf dem das interessierende Meßobjekt mit einer bestimmten Berührungsfläche [ in Fig. 1 Applanationskreis 61] aufliegt, der Auskopplung und dem Empfang des Lichtbündels 2 mittels einer Photoempfängerzeile 7 zur Aufnahme einer Intensitätsverteilung, der Speicherung einer Normalkurve 81 als Intensitätsverteilung bei unberührtem Schichtwellenleiter 5 und mindestens einer Meßkurve 82 bei Ausbildung einer entsprechenden Berührungsfläche des Meßobjektes am Schichtwellenleiter 5, Errechnung einer Differenzkurve 83 aus Normal- und Meßkurve 81 und 82 und Ermittlung der Extrema als Meßmarken für die Lage des Randes der Berührungsfläche aufgrund eines Sprunges der effektiven Brechzahl in diesen Bereichen.

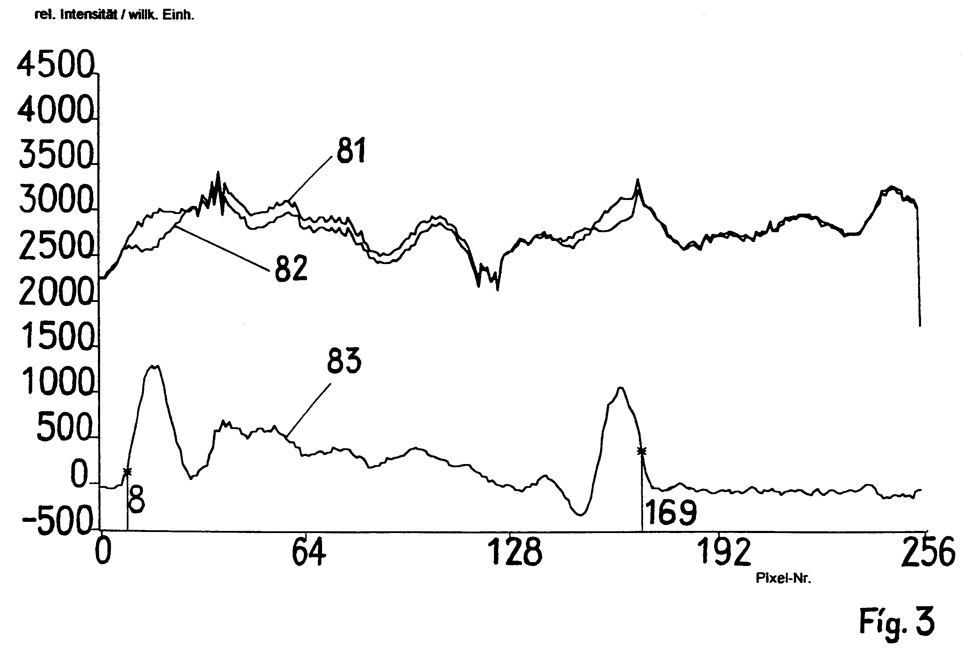

Im folgenden soll ohne Beschränkung der Allgemeinheit eine Anordnung zur Bestimmung eines Applanationskreises 61 beschrieben werden. Wie Fig. 1 zeigt, sendet eine Beleuchtungseinrichtung 1 ein weitgehend inkohärentes, nahezu paralleles und homogenes Lichtbündel 2 aus, das im wesentlichen eindimensional breit aufgeweitet ist. Zur Einkopplung wird dieses Lichtbündel 2 zweckmäßig über eine Zylinderlinse 4 auf die Stirnfläche des Schichtwellenleiters 5 fokussiert. Beim Durchqueren des Schichtwellenleiters 5 kommt es im Bereich der Berührungsfläche - hier des Applanationskreises 61 eines menschlichen Auges 6 - zu einer Beeinflussung des Lichtbündels 2, deren Auswirkungen weiter unten erklärt werden. Das aus dem Schichtwellenleiter 5 austretende Lichtbündel 2 wird über eine weitere Zylinderlinse 4 auf die Photoempfängerzeile 7 fokussiert und als eindimensionale Intensitätsverteilung, optoelektronisch gewandelt, einer Auswerteeinrichtung 8 zugeführt. In dieser Auswerteeinrichtung 8 erfolgt zunächst eine Speicherung von Signalen der Photoempfängerzeile 7 ohne Berührung des Schichtwellenleiters 5 mit einem Objekt als sogenannte Normalkurve 81, wie sie in Fig. 3 dargestellt ist.

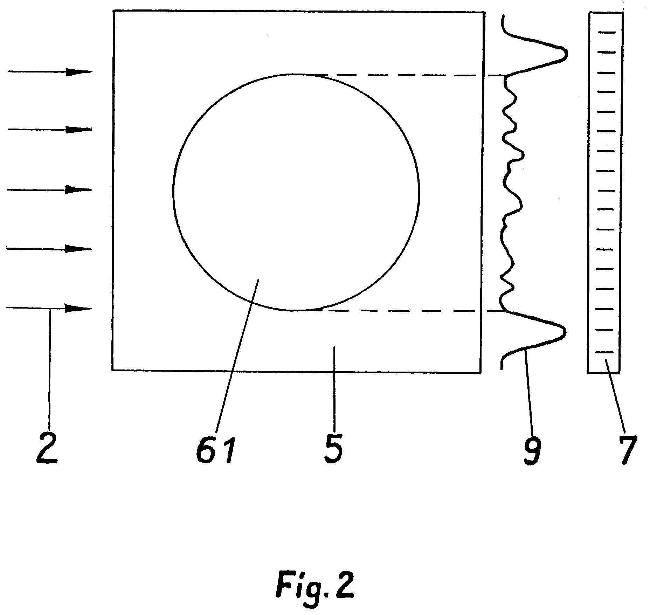

Als nächstes erfolgt beim eigentlichen Meßprozeß die Auslesung von wenigstens einer Intensitätsverteilung 9 aus der Photoempfängerzeile 7 bei Aufliegen eines Meßobjektes in Form des applanierten Auges 6, dessen Meßgröße der Applanationskreis 61 als Berührungsfläche am Schichtwellenleiter 5 ist. Da die Berührung des Auges eine Änderung des effektiven Brechungsindex unterhalb des Applanationskreises 61 verursacht, sind Veränderungen der Intensität in der Photoempfängerzeile 7 zu erwarten. Der qualitative Effekt ist in Fig. 2 schematisch dargestellt. Wie jedoch in Fig. 3 der Verlauf der mit berührendem Auge 6 aufgenommenen Meßkurve 82 zeigt, sind die Veränderungen minimal und scheinen im Rauschen unterzugehen. Der direkte Vergleich der Einzelsignale der Meßkurve 82 mit dem der Normalkurve 81 ergibt jedoch auswertefähige Aussagen. In der Auswerteeinrichtung 8 wird zu diesem Zweck eine Differenzkurve 83 über dem Pixelraster der Photoempfängerzeile 7 erzeugt, die die Veränderungen der örtlichen Intensitätsverteilung des Lichtbündels 2 im Bereich der Randzone des Applanationskreises 61 sichtbar macht. Ursache dafür sind Brechung und Beugung von Licht infolge eines Sprunges des effektiven Brechungsindex im Schichtwellenleiter 5 unterhalb der Peripherie des Applanationskreises 61.

Fig. 2 veranschaulicht die Wirkungsweise des Sprunges der effektiven Brechzahl im Bereich der Peripherie des Applanationskreises 61 auf die Verteilung der Lichtintensität. Das im Schichtwellenleiter 5 geführte parallele Licht 2 erfährt insbesondere in dem Bereich der Peripherie Brechung und Beugung, indem der Brechzahlsprung senkrecht zur Lichtrichtung erfolgt. Dadurch ergeben sich die charakteristischen Minima der Intensitätsverteilung 9, die die Differenz der Intensitätsverteilungen vor dem Kontakt durch das Auge und bei Kontakt durch das Auge darstellt. Die beiden charakteristischen Minima in der berechneten Differenzkurve 83 werden zur Durchmesserbestimmung herangezogen. An ihrer äußeren Flanke wird die Lage eines zuvor festgelegten Schwellwertes - vorzugsweise 10% vom Grenzwert - ermittelt und ihr Abstand bestimmt. Wie Fig. 2 zeigt, ist dieser Abstand allerdings größer als der Durchmesser des Applanationskreises. Jedoch erhält man durch Subtraktion eines konstanten Korrekturwertes, dessen Größe von dem Abstand zwischen Photoempfängerzeile 7 und Applanationskreis 61 abhängt, den wahren Durchmesser des Applanationskreises 61.

Die lokalen Extrema (in Fig. 3 als Maxima erzeugt) der Differenzkurve 83 lassen über die genaue Kenntnis des Pixelrasters der Photoempfängerzeile 7 eine Bestimmung des Durchmessers des Applanationskreises 61 zu, wobei zur genauen Ermittlung des Durchmessers nicht der Wert des lokalen Maximums verwendet wird, sondern der Wert an der äußeren Flanke, bei dem der Maximalwert auf ca. 10% abgesunken ist.

Zu beachten ist dabei, daß die Breite der Intensitätsverteilung 9 mit wachsendem Abstand der Empfängerzeile 7 vom Applanationskreis 61 zunimmt, so daß der so gemessene Durchmesser des Applanationskreises 61 um einen von der jeweiligen konkreten Anordnung abhängigen Betrag größer ist als der wahre Durchmesser.

Dieser Betrag ist also vom jeweiligen Meßwert der Meßkurve 82 (Fig. 3) zu subtrahieren, um den wahren Durchmesser zu erhalten. Der Korrekturwert wird dazu empirisch durch Vergleich mit den Durchmesserwerten bestimmt, die z. B. mit einem Meßmikroskop gewonnen werden.

### Liste der verwendeten Bezugszeichen

- 1: Beleuchtungseinrichtung
- 2: Lichtbündel
- 3: Polarisator
- 4: Zylinderlinse
- 5: Schichtwellenleiter
- 6: Auge
- 61: Applanationskreis, Berührungsfläche
- 7: Photoempfängerzeile
- 8: Auswerteeinrichtung
- 81: Normalkurve
- 82: Meßkurve
- 83: Differenzkurve
- 9: Intensitätsverteilung

## Patentansprüche

1. Verfahren zur Bestimmung einer zumindest annähernd kreisförmigen Berührungsfläche eines deformierten Mediums auf einer ebenen Fläche, wobei in einem auf die ebene Fläche aufgebrachten Schichtwellenleiter (5) ein paralleles Lichtbündel (2) eingekoppelt wird und mittels einer nach dem Schichtwellenleiter (5) angeordneten Photoempfängerzeile (7) eine Intensitätsmessung des durch den Schichtwellenleiter (5) hindurchtretenden parallelen Lichtbündels (2) erfolgt, dadurch gekennzeichnet, daß
- ein im wesentlichen inkohärentes Lichtbündel (2) mit großer lateraler Ausdehnung in den Schichtwellenleiter (5) eingekoppelt wird,
- mittels der Photoempfängerzeile (7) eine eindimensionale Intensitätsverteilung (9) aufgenommen wird,
- eine Normalkurve (81) der Intensitätsverteilung (9) ohne Berührung mit dem deformierbaren Medium aufgenommen wird,
- mindestens eine Meßkurve (82) der Intensitätsverteilung (9) mit Berührung des deformierbaren Mediums aufgezeichnet wird,
- eine Differenzkurve (83) der Intensitätsverteilung (9) aus Normal- und Meßkurve (81,82) gebildet wird,
- eine Analyse der Differenzkurve (83) auf lokale Extrema erfolgt, die sich aufgrund einer Brechungs- und Beugungsverschiebung ergeben, die an Stellen eines Sprunges des effektiven Brechungsindex des Schichtwellenleiters (5) am Rand der Berührungsfläche (61) mit dem deformierbaren Medium senkrecht zur Richtung des Lichtbündels (2) auftritt, und
- eine Bestimmung des korrigierten metrischen Abstandes von zusammengehörigen Paaren der Extrema erfolgt.

2. Verfahren nach Anspruch 1, dadurch gekennzeichnet,
daß die Differenzkurve (83) zu den absoluten Signalgrößen ins Verhältnis gesetzt wird.

3. Verfahren nach Anspruch 1, dadurch gekennzeichnet,
daß zur Erreichung einer großen Änderung des Brechungsindex im Schichtwellenleiter (5) der TM₀-Mode angeregt wird.

4. Verfahren nach Anspruch 1, dadurch gekennzeichnet,
daß der metrische Abstand zweier zusammengehöriger Extrema durch
- Festlegen eines Intensitätsschwellwertes bezogen auf die Größe der Extrema des metrischen Abstandes der Extrema bei Erreichen des Intensitätsschwellwertes an den auf die Lage der Berührungsfläche (61) bezogenen äußeren Flanken der zwei lokalen Extrema und
- additive Korrektur des metrischen Abstandes mit einer von der Entfernung zwischen deformierbaren Medium und Photoempfängerzeile (7) abhängige Konstante ermittelt wird.

5. Verfahren zur Bestimmung eines Applanationskreises (61) an einem Applanationstonometer, bei dem ein mit einem Schichtwellenleiter (5) beauflagter Tonometerkörper, an dem eine Applanationskraftmessung erfolgt bis zum Erreichen eines bestimmten Durchmessers des Applanationskreises (61) auf ein Auge (6) aufgedrückt, in den Schichtwellenleiter (5) ein paralleles Lichtbündel (2) eingekoppelt und dessen Intensität mittels eines Fotoempfängers aufgenommen wird, dadurch gekennzeichnet, daß
- ein im wesentlichen inkohärentes Lichtbündel (2) mit großer lateraler Ausdehnung in den Schichtwellenleiter (5) eingekoppelt wird,
- eine eindimensionale Intensitätsverteilung mittels Photoempfängerzeile (7) aufgenommen wird,
- eine Normalkurve (81) der Intensitätsverteilung ohne Berührung des Auges (6) aufgenommen wird, und mindestens eine Meßkurve (82) der Intensitätsverteilung mit applaniertem Auge (6) aufgezeichnet wird,
- eine Differenzkurve (83) der Intensitätsverteilung aus Normal- (81) und Meßkurve (82) gebildet wird,
- eine Analyse der Differenzkurve (83) auf lokale Extrema erfolgt, die sich aufgrund einer Brechungs- und Beugungserscheinung ergeben, die an Stellen eines Sprunges des effektiven Brechungsindex des Schichtwellenleiters (5) am Applanationskreis (61) senkrecht zur Richtung des Lichtbündels (2) auftritt, und
- eine Bestimmung des korrigierten metrischen Abstandes der zwei lokalen Extrema erfolgt.

6. Verfahren nach Anspruch 5, dadurch gekennzeichnet,
daß die Differenzkurve (83) auf die absoluten Intensitätswerte bezogen wird.

7. Verfahren nach Anspruch 5, dadurch gekennzeichnet,
daß zur Erreichung einer großen Änderung des Brechungsindex im Schichtwellenleiter (5) der TM₀-Mode angeregt wird.

8. Verfahren nach Anspruch 5, dadurch gekennzeichnet,
daß der metrische Abstand der lokalen Extrema durch
- Festlegen eines Intensitätsschwellwertes bezogen auf die Größe der Extrema,
- Erfassung des metrischen Abstandes der Extrema bei Erreichen des Intensitätsschwellwertes an den auf die Lage des Applanationskreises (61) bezogenen äußeren Flanken der zwei lokalen Extrema und
- additive Korrektur des metrischen Abstandes mit einer von der Entfernung zwischen Meßobjekt und Photoempfängerzeile (7) abhängigen Konstanten ermittelt wird.

9. Anordnung zur Bestimmung einer zumindest annähernd kreisförmigen Berührungsfläche eines deformierbaren Mediums an einer ebenen Fläche, wobei auf der ebenen Fläche ein Schichtwellenleiter (5) aufgebracht ist, eine Beleuchtungseinrichtung (1) zur Erzeugung eines im wesentlichen parallelen Lichtbündels (2) vor und eine Photoempfängerzeile (7) nach dem Schichtwellenleiter (5) definiert zur Aufnahme einer Intensitätsverteilung (9) angeordnet sind, dadurch gekennzeichnet, daß
- die Beleuchtungseinrichtung (1) eine im wesentlichen inkohärente Lichtquelle beinhaltet
- das von der Beleuchtungseinrichtung (1) erzeugte parallele Lichtbündel (2) mindestens so breit ist, daß die zu erwartende Ausdehnung der Berührungsfläche des deformierbaren Mediums wesentlich überschritten wird, und
- der Photoempfangerzeile (7) eine Auswerteeinrichtung (8) nachgeordnet ist, die Mittel zur Speicherung einer Normalkurve (81) und mindestens einer Meßkurve (82), Mittel zum Erzeugen Differenzkurve (83) aus Normal- (81) und Meßkurve (82) sowie Mittel zum Bestimmen von lokalen Extrema der Differenzkurve (83) und deren Abstand als Maß für die Ausdehnung der Berührungsfläche (61) enthält.

10. Anordnung nach Anspruch 9, dadurch gekennzeichnet,
daß zur Anregung des TM₀-Mode des Schichtwellenleiters (5) ein Polarisator (3) zwischen Beleuchtungseinrichtung (1) und Schichtwellenleiter (5) angeordnet ist.

11. Anordnung nach Anspruch 9, dadurch gekennzeichnet,
daß die Auswerteeinrichtung (8) zusätzlich Mittel zur Normierung der Differenzkurve (83) auf absolute Intensitätswerte der Meßkurve (82) enthält.

12. Anordnung zum Nachweis eines Applanationskreises (61) an einem Applanationstonometer, bestehend aus einem mit einem Schichtwellenleiter (5) beauflagten Tonometerkörper, an dem bei Erzeugung des Applanationskreises (61) an einem Auge (6) eine Applanationskraft meßbar ist, einer Beleuchtungseinrichtung (1) zur Einkopplung eines parallelen Lichtbündels (2) in den Schichtwellenleiter (5) und einer Photoempfängerzeile (7) zur Aufnahme einer aus dem Schichtwellenleiter (5) austretenden Intensitätsverteilung (9), dadurch gekennzeichnet, daß
- die Beleuchtungseinrichtung (1) eine im wesentlichen inkohärente Lichtquelle beinhaltet,
- das von der Beleuchtungseinrichtung (1) erzeugte parallele Lichtbündel (2) mindestens so breit ist, daß ein zu erwartender Durchmesser des Applanationskreises (61) wesentlich überschritten wird, und
- der Photoempfangerzeile (7) eine Auswerteeinrichtung (8) nachgeordnet ist, die Mittel zur Speicherung einer Normalkurve (81) und mindestens einer Meßkurve (82), Mittel zum Erzeugen einer Differenzkurve (83) aus Normal- (81) und Meßkurve (82) sowie Mittel zum Bestimmen von lokalen Extrema der Differenzkurve (83) und deren Abstand als Maß für den Durchmesser des Applanationskreises (61) enthält.

13. Anordnung nach Anspruch 12, dadurch gekennzeichnet,
daß zur Anregung des TM₀-Mode des Schichtwellenleiters (5) ein (linearer) Polarisator (3) zwischen Beleuchtungseinrichtung (1) und Schichtwellenleiter (5) angeordnet ist.

14. Anordnung nach Anspruch 12, dadurch gekennzeichnet,
daß die Auswerteeinrichtung (8) zusätzlich Mittel zur Normierung der Differenzkurve (83) auf absolute Intensitätswerte der Meßkurve (82) enthält.
